Europäisches Patentamt

European Patent Office

Office européen des brevets

(19)

(11) Numéro de publication: **0 068 996**
**B1**

(12)

# FASCICULE DE BREVET EUROPEEN

(45) Date de publication du fascicule du brevet:
04.09.85

(51) Int. Cl.⁴: **B 01 D 1/28,** B 01 D 1/26,
A 23 C 1/12

(21) Numéro de dépôt: **82401123.3**

(22) Date de dépôt: **18.06.82**

(54) **Perfectionnement aux installations de concentration par évaporation à compression de vapeur d'un produit liquide, tel qu'un produit laitier.**

(30) Priorité: **26.06.81  FR 8112689**

(43) Date de publication de la demande:
**05.01.83 Bulletin 83/1**

(45) Mention de la délivrance du brevet:
**04.09.85 Bulletin 85/36**

(84) Etats contractants désignés:
**AT BE CH DE GB IT LI LU NL SE**

(56) Documents cités:
**FR - A - 449 399**
**FR - A - 532 225**
**FR - A - 2 448 377**
**US - A - 3 423 293**

(73) Titulaire: **LAGUILHARRE S.A., 2, avenue du 18 Juin 1940,
F-92500 Rueil Malmaison (FR)**

(72) Inventeur: **Ciboit, Jacques Jean, 164 Bis, rue de
l'Université, F-75007 Paris (FR)**

(74) Mandataire: **Kedinger, Jean-Paul et al, c/o Cabinet
Malemont 42, avenue du Président Wilson, F-75116 Paris
(FR)**

ACTORUM AG

# Description

La présente invention concerne une installation de concentration d'un produit liquide, tel qu'un produit laitier, un produit chimique ou un effluent industriel par exemple, comportant au moins deux évaporateurs disposés en série sur le produit, chacun étant à simple effet ou à multiple effet et chacun des effets comprenant un circuit vapeur de chauffage et un circuit vapeur créée par l'évaporation, deux au moins de ces évaporateurs étant à compression mécanique de vapeur et de ce fait comportent chacun un compresseur mécanique de vapeur.

Dans les installations connues de ce type, il est nécessaire d'établir et de maintenir pendant leur fonctionnement, l'équilibre thermique dans chacun des évaporateurs. Il est par conséquent nécessaire de réaliser et de maintenir autant d'équilibres qu'il y a d'évaporateurs, ce qui conduit à des processus très lourds quand le nombre d'évaporateurs est important. En outre, ces processus sont onéreux en calories et peuvent entraîner des pertes de chaleur latentes éventuelles.

Le but de la présente invention est de remédier à ces inconvénients et pour ce faire, elle propose une installation qui se caractérise en ce que les évaporateurs sont connectés selon une configuration d'évaporateur à multiple effet, étant entendu qu'outre les compresseurs mécaniques de vapeur, cette installation peut comprendre au moins un autre moyen d'apport calorifique.

On rappellera à toutes fins utiles que dans un évaporateur à compression mécanique de vapeur, tout ou partie de la vapeur créée par l'évaporation est recomprimée mécaniquement pour être utilisée au chauffage de ce même évaporateur. On rappellera également qu'un évaporateur à multiple effet est constitué par plusieurs corps d'évaporation, la vapeur évaporée créée dans le premier corps (appelé premier effet) étant utilisée comme source de calories pour chauffer le deuxième corps (appelé deuxième effet), la vapeur évaporée créée dans le deuxième corps étant utilisée comme source de calories pour chauffer le troisième corps (appelé troisième effet), et ainsi de suite jusqu'au dernier corps (appelé dernier effet).

Par ailleurs, il convient de noter que le circuit de vapeur créée d'un évaporateur ou d'un effet donné, comprend toutes les parties de cet évaporateur ou effet qui sont en contact avec la vapeur créée. De même, le circuit de chauffage d'un évaporateur ou d'un effet donné comprend toutes les parties de cet évaporateur ou effet dans lesquels la vapeur de chauffage cède ses calories au produit à évaporer.

Ces définitions étant rappelées, il apparaît à l'examen de la nouvelle installation selon l'invention, que celle-ci ne nécessite plus que la réalisation et le maintien d'un seul équilibre thermique puisque tous les évaporateurs sont en relation, et qu'en outre il n'y a qu'une perte réduite de chaleur latente.

Selon la présente invention, tous les évaporateurs sont en relation de manière à obtenir une installation qui a seulement la configuration physique d'un évaporateur à multiple effet, et donc pas nécessairement le même fonctionnement. En effet, cette installation peut fonctionner comme un évaporateur à multiple effet, c'est-à-dire que la vapeur créée par l'évaporation passe du circuit vapeur créée des évaporateurs dans le circuit vapeur de chauffage des évaporateurs suivants. Toutefois, le processus inverse peut également se produire, c'est-à-dire que de la vapeur du circuit vapeur de chauffage d'un évaporateur donné passe dans le circuit vapeur créée d'un autre évaporateur situé en amont.

Il a été indiqué précédemment que les évaporateurs mis en œuvre dans l'installation objet de la présente demande pouvaient être chacun à simple effet ou à multiple effet. On comprendra bien évidemment que par connection de ces évaporateurs selon une configuration d'évaporateur à multiple effet, le circuit vapeur créée des effets uniques des évaporateurs à simple effet ou des derniers effets des évaporateurs à multiple effet va se retrouver relié respectivement au circuit vapeur de chauffage des effets uniques des évaporateurs à simple effet ou des premiers effets des évaporateurs à multiple effet.

Différentes variantes de l'invention peuvent être envisagées.

Ainsi, le refoulement du compresseur mécanique d'un évaporateur au moins peut être relié respectivement à l'un quelconque des circuits vapeur créée situés entre l'évaporateur à compression mécanique considéré et l'évaporateur à compression mécanique qui le précède, c'est-à-dire celui qui fonctionne à une température d'évaporation plus élevée.

Le refoulement d'un compresseur mécanique au moins peut également être relié respectivement à l'aspiration du compresseur mécanique qui le précède, c'est-à-dire à celui qui fonctionne à une température d'évaporation plus élevée.

Enfin, le refoulement d'un compresseur mécanique au moins peut être relié respectivement à l'un quelconque des circuits vapeur de chauffage situés entre le compresseur mécanique considéré et le compresseur mécanique qui le précède, c'est-à-dire celui qui refoule une vapeur plus chaude que celle refoulée par le compresseur mécanique considéré.

Pour des questions de simplicité, d'encombrement et de prix de revient de l'installation, il est avantageux de réduire le nombre de moteurs électriques entraînant les compresseurs mécaniques. Ainsi, au moins deux des compresseurs mécaniques pourrront être montés sur et entraînés par le même arbre moteur.

De même, au moins deux des compresseurs mécaniques pourront être montés sur un même arbre (ou sur des arbres distincts) entraîné(s) par un arbre moteur par l'intermédiaire d'un multiplicateur d'entraînement.

Plusieurs modes de réalisation de la présente invention sont illustrés par les dessins annexés dans lesquels:

– les figures 1 et 2 sont des représentations schématiques d'installations selon l'invention comportant deux évaporateurs à compression mécanique de vapeur, l'un étant à double effet et l'autre à simple effet.

– la figure 3 est la représentation schématique d'une installation selon l'invention comportant trois évaporateurs, deux étant à compression mécanique de vapeur, et

– les figures 4 et 5 sont la représentation de deux variantes du mode d'entraînement des compresseurs mécaniques des figures 1 et 2.

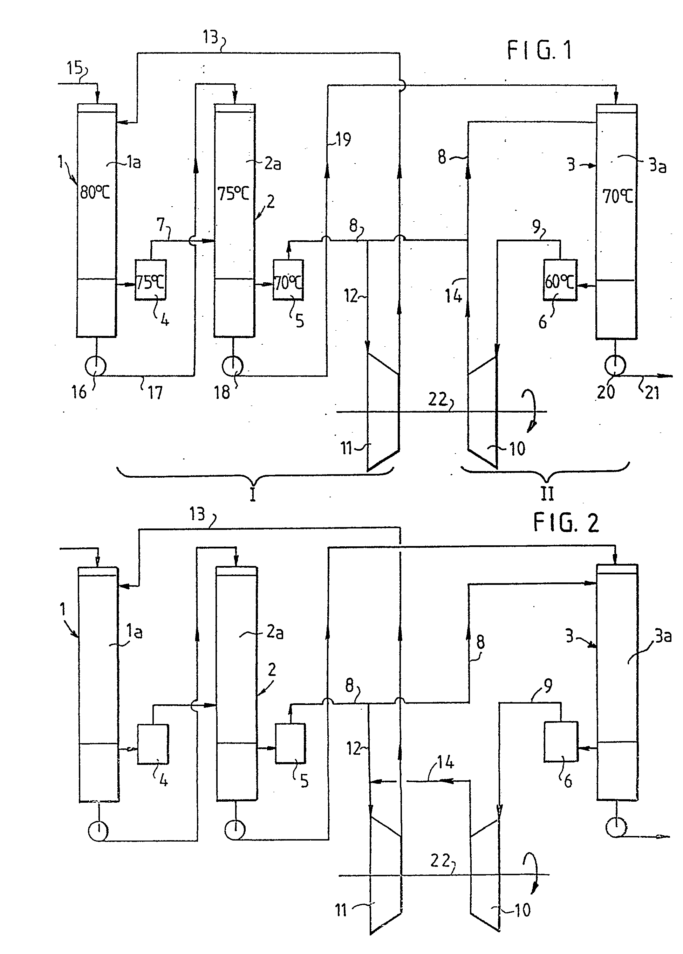

L'installation de la figure 1 comprend un premier évaporateur I du type à double effet 1,2 et un second évaporateur II du type à simple effet 3, aux effets 1, 2 et 3 étant respectivement associés les séparateurs vapeur-liquide 4, 5, 6. Dans le cas présent, les évaporateurs I et II sont à flot tombant, mais il est bien certain que l'invention s'étend à n'importe quel autre type d'évaporateur.

Le circuit vapeur créée par l'évaporation (à 75°C dans l'exemple choisi) de l'effet 1 erst constitué par tous les éléments contenant ladite vapeur créée, ces éléments étant entre autres le séparateur 4 et le conduit 7 dont l'une des extrémités est en relation avec la partie haute du séparateur 4 et l'autre débouche dans le corps de chauffe 2a de l'effet 2.

De même, le circuit vapeur créée par l'évaporation (à 70°C dans l'exemple choisi) de l'effet 2 est constitué notamment par le séparateur 5 et le conduit 8 issu de la partie haute du séparateur 5 et débouchant dans le corps de chauffe 3a de l'effet 3.

Enfin, le circuit vapeur créée par l'évaporation (à 60°C dans l'exemple choisi) de l'effet 3 est constitué notamment par le séparateur 6 et le conduit 9 issu de la partie haute de ce dernier et aboutissant à l'aspiration du compresseur mécanique de vapeur 10 dont il sera question ci-après.

Par ailleurs, le circuit vapeur de chauffage des effets 1, 2 et 3 est respectivement constitué par le corps de chauffe 1a (à 80°C dans l'exemple choisi) de l'effet 1, le corps de chauffe 2a (à 75°C dans l'exemple choisi) et le corps de chauffe 3a (à 70°C dans l'exemple choisi).

On notera que les évaporateurs I et II sont bien connectés selon une configuration d'évaporateur à multiple effet.

Conformément à l'invention, les évaporateurs I et II sont tous deux à compression mécanique de vapeur, c-est-à-dire qu'ils comportent chacun un compresseur mécanique de vapeur (11, 10). Plus précisément, le conduit d'aspiration 12 du compresseur mécanique 11 de l'évaporateur I est relié au conduit 8, alors que son conduit de refoulement 13 débouche dans le corps de chauffe 1a. D'autre part, le conduit d'aspiration du compresseur mécanique 10 est confondu avec le conduit 9 et le conduit de refoulement 14 de ce même compresseur est relié au conduit 8 en aval de la dérivation 12.

Dans le cas de l'exemple choisi, le compresseur 11 comprime la vapeur à 70°C de manière à l'amener à 80°C et le compresseur 10 comprime la vapeur à 60°C de manière à l'amener à 70°C.

Le produit à concentrer, qui peut par exemple être du lait écrémé, arrive en tête du premier effet 1 par un conduit 15, effet dans lequel il subit une première évaporation avant d'être amené de la base de ce même effet 1 en tête du second effet 2 par une pompe 16 et un conduit 17, effet 2 dans lequel il subit une seconde évaporation.

Le lait ainsi préconcentré est ensuite amené de la base de l'effet 2 en tête de l'évaporateur 3 par une pompe 18 et un conduit 19, évaporateur dans lequel le lait subit une dernière concentration avant d'être soutiré par une pompe 20 et un conduit 21.

Le cheminement de la vapeur d'évaporation créée dans l'effet 1, est 4→7→2a.

Sie la quantité de vapeur disponible à la sortie du séparateur 5 correspond exactement à celle nécessaire au fonctionnement de l'évaporateur I, la totalité de cette vapeur issue de ce séparateur 5 sera aspirée par le compresseur 11 via les conduits 8 puis 12, puis comprimée et refoulée vers le corps de chauffe 1a via le conduit 13.

De même, si la quantité de vapeur disponible à la sortie du séparateur 6 correspond exactement à celle nécessaire au fonctionnement de l'évaporateur II, cette vapeur issue du séparateur 6 sera aspirée par le compresseur 10 et refoulée en intégralité vers le corps de chauffe 3a, via les conduits 14 puis 8.

Par contre, si pour une raison ou une autre (par exemple un appoint de vapeur vive injectée dans le corps dé chauffe 1a, directement ou par l'intermédiaire d'un thermocompresseur par exemple) la quantité de vapeur disponible à la sortie du séparateur 5 est supérieure à celle nécessaire au fonctionnement de l'évaporateur I, le surplus non aspiré par le compresseur 11 ira rejoindre la vapeur comprimée issue du compresseur 10 et servira de source de calories dans le corps de chauffe 3a.

Inversement, si la quantité de vapeur disponible à la sortie du séparateur 6 est supérieure à celle nécessaire au fonctionnement de l'évaporateur II, le surplus peut être aspiré par le compresseur 11 via le conduit 8 puis 12.

On remarquera enfin que les deux compresseur 10 et 11 sont montés sur le même arbre moteur 22 entraîné par un moteur schématisé par le symbole ↓.

Dans le mode de réalisation qui vient d'être décrit, le conduit de refoulement 14 du compresseur mécanique 10 est relié au circuit vapeur créée par l'évaporation de l'effet 2, et plus précisément au conduit 8 en aval de la dérivation 12.

Selon un autre mode de réalisation de l'invention représenté sur la figure 2, le refoulement 14 du compresseur 10 est non plus relié à ce conduit 8, mais au conduit d'aspiration 12 du compresseur 11, le reste de l'installation étant en tout point identique à celle de la figure 1 qui vient d'être décrite. Dans ce cas, on comprendra que toute la vapeur issue du compresseur 10 sera recomprimée dans le compresseur 11 et de la vapeur en quantité au moins équivalente à celle issue du compresseur 10 se dirigera par le conduit 8 vers le corps de chauffe 3a.

Selon un autre mode de réalisation encore de l'invention, le refoulement 14 du compresseur mécanique 10 peut être relié au conduit 8 en amont de la dérivation 12, le reste de l'installation étant inchangé par rapport à celle de la figure 1. Cette disposition du refoulement 14 implique qu'une partie de la vapeur issue du compresseur 10 est recomprimée dans le compresseur 11.

Il est bien certain que dans les installations qui viennent d'être décrites, il est possible d'apporter de nombreuses modifications sans pour autant porter atteinte à l'esprit de l'invention. Ainsi, le sens de circulation du produit à concentrer est quelconque.

Il pourrait d'abord traverser l'effet 3, puis l'effet 1 (ou 2), puis enfin l'effet 2 (ou 1). L'installation peut comporter plus de deux évaporateurs, chaque évaporateur pouvant être à simple ou multiple effet et dans ce cas plus de deux évaporateurs peuvent être à compression mécanique de vapeur. De même, l'évaporateur I pourrait ne comprendre qu'un seul effet ou comprendre plus de deux effets, l'évaporateur II pouvant pour sa part être à multiple effet.

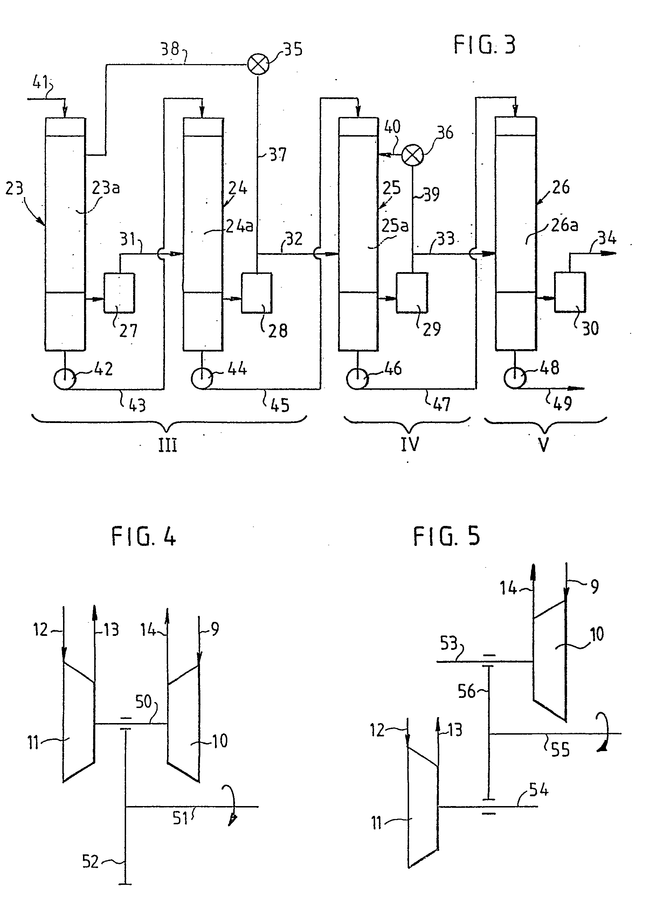

Ainsi, la figure 3 représente une installation qui comprend, en série, un évaporateur III du type à double effet 23, 24, un évaporateur IV à simple effet 25 et un évaporateur V à simple effet 26, aux effets 23 à 26 étant associés respectivement les séparateurs vapeur-liquide 27, 28, 29, 30.

Le circuit vapeur créée par l'évaporation de l'effet 23 est constitué entre autres par le séparateur 27 et le conduit 31 dont l'une des extrémités est en relation avec la partie haute dudit séparateur 27 et l'autre débouche dans le corps de chauffe 24a de l'effet 24, corps de chauffe qui constitué le circuit vapeur de chauffage de cet effet.

Par ailleurs, le circuit vapeur créée par l'évaporation de l'effet 24 comprend notamment le séparateur 28 et le conduit 32 qui est issu de la partie haute de ce dernier et qui débouche dans le circuit vapeur de chauffage de l'effet 25, c'est-à-dire dans le corps de chauffe 25a de cet effet.

Le circuit vapeur créée par l'évaporation de l'effet 26 comprend, quant à lui, le séparateur 29 et le conduit 33 qui est issu de la partie haute du séparateur 29 et qui débouche dans le corps de chauffe 26a de l'effet 26, corps de chauffe qui constitue le circuit vapeur de chauffage de cet effet.

Le séparateur 30 est pour sa part relié par le conduit 34 à une source de vide (non représentée).

Les évaporateurs III et IV sont à compression mécanique de vapeur. Plus précisément, ils comportent chacun un compresseur mécanique 35, 36, le conduit d'aspiration 37 du compresseur 35 étant relié au conduit 32, son conduit de refoulement 38 débouchant dans le corps de chauffe 23a de l'effet 23. Quant au compresseur mécanique 36, son conduit d'aspiration 39 est raccordé au conduit 33 et son conduit de refoulement 40 débouche dans le corps de chauffe 25a.

Le produit à concentrer (produit laitier, vinasses de distillerie ou produit chimique par exemple) arrive en tête de l'effet 23 par un conduit 41, traverse cet effet 23, est ensuite amené par une pompe 42 et un conduit 43 en tête de l'effet 24, puis successivement de la base de ce dernier en tête de l'effet 25 et de la base de ce dernier en tête de l'effet 26 respectivement par les pompes et conduits 44, 45 et 46, 47, avant d'être soutiré à la base du dernier effet 26 par la pompe 48 et le conduit 49.

Comme dans le cas de l'installation de la figure 1 décrite précédemment, si pour une raison ou une autre la quantité de vapeur disponible à la sortie des séparateurs 28 est supérieure à celle nécessaire au fonctionnement de l'évaporateur III, de la vapeur circulera dans le conduit 32 dans le sens séparateur 28 → corps de chauffe 25a et dans ce cas l'installation fonctionnera comme un évaporateur à multiple effet. De même, si à la sortie du séparateur 29 on dispose (à la suite d'un apport extérieur de vapeur dans le corps de chauffe 25a) d'une quantité de vapeur supérieure à celle nécessaire au fonctionnement des évaporateurs IV et V, le surplus peut être évacué par 34. Mais, si on limite l'évacuation par ce conduit 34, on assistera à une circulation de vapeur dans le conduit 32 dans le sens corps de chauffe 25a → conduit d'aspiration 37.

Bien évidemment, comme dans le cas des installations des figures 1 et 2, les compresseurs 35 et 36 peuvent être montés sur un même arbre moteur.

Les figures 4 et 5 montrent que les deux compresseurs 10 et 11 des installations des figures 1 et 2 peuvent être soit montés sur un même arbre 50 entraîné par un arbre moteur 51 par l'intermédiaire d'un multiplicateur d'entraînement 52 (figure 4), soit montés chacun sur un arbre distinct 53, 54, ces derniers étant entraînés par le même arbre moteur 55 par l'intermédiaire d'un multiplicateur d'entraînement 56 (figure 5).

Bien entendu, les mêmes dispositions peuvent être adoptées quelle que soit l'installation considérée (par exemple celle de la figure 3) et quel que soit le nombre de compresseurs, trois ou plusieurs compresseurs pouvant fort bien être montés sur le même arbre moteur ou sur des arbres distincts entraînés par le même arbre moteur.

En outre, en dehors des compresseurs mécaniques mis en œuvre dans les installations qui viennent d'être décrites et d'une manière générale dans les installations selon l'invention, on peut utiliser d'autres moyens d'apport calorifiques tels que vapeur vive ou thermocompresseur.

Enfin, on notera que pour des questions de clarté des figures, on n'a pas représenté les moyens classiques de dégazage et d'évacuation des condensats, ainsi que ceux nécessaires à réaliser le vide éventuelle et l'équilibre calorifique.

**Revendications**

1. Installation de concentration d'un produit liquide, tel qu'un produit laitier, un produit chimique ou un effluent industriel par exemple, comportant au moins deux évaporateurs (I, II) disposés en série sur le produit, chacun étant à simple effet (II) ou à multiple effet (I) et chacun des effets (1, 2, 3) comprenant un circuit vapeur de chauffage (1a, 2a, 3a) et un circuit vapeur créée par l'évaporation (4, 7; 5, 8; 6, 9), deux au moins de ces évaporateurs (I, II) étant à compression mécanique de vapeur et de ce fait comportant chacun un compresseur mécanique de vapeur (10, 11), caractérisée en ce que les évaporateurs sont connectés selon une configuration d'évaporateur à multiple effet.

2. Installation selon la revendication 1, caractérisée en ce qu'outre les compresseurs mécaniques, elle comprend au moins un autre moyen d'apport calorifique.

3. Installation selon la revendication 1 ou 2, caractérisée en ce que le refoulement (14) du compresseur mécanique (10) d'un évaporateur au moins (II) est relié respectivement à l'un quelconque des circuits vapeur créée (5, 8) situés entre l'évaporateur à compression mécanique considéré (II) et l'évaporateur à compression mécanique qui le précède (I).

4. Installation selon la revendication 1, 2 ou 3, caractérisée en ce que le refoulement (14) d'un compresseur mécanique au moins (10) est relié respectivement à l'aspiration (12) du compresseur mécanique (11) qui le précède.

5. Installation selon la revendication 1, 2, 3 ou 4, caractérisée en ce que le refoulement (40) d'un compresseur mécanique au moins (36) est relié respectivement à l'un quelconque des circuits vapeur de chauffage (25a) situés entre le compresseur mécanique considéré (36) et celui qui le précède (35).

6. Installation selon l'une quelconque des revendications précédentes, caractérisée en ce qu'au moins deux des compresseurs mécaniques (10, 11) sont montés sur et entraînés directement par le même arbre moteur (22).

7. Installation selon l'une quelconque des revendications 1 à 5, caractérisée en ce qu'au moins deux des compresseurs mécaniques (10, 11) sont montés sur un même arbre (50) entraîné par un arbre moteur (51) par l'intermédiaire d'un multiplicateur d'entraînement (52).

8. Installation selon l'une quelconque des revendications 1 à 5, caractérisée en ce qu'au moins deux des compresseurs mécaniques (10, 11) sont montés sur des arbres distincts (53, 54) entraînés par un arbre moteur (55) par l'intermédiaire d'un multiplicateur d'entraînement (56).

**Patentansprüche**

1. Vorrichtung zum Konzentrieren eines flüssigen Produkts, wie z.B. eines Milchprodukts, eines chemischen Produkts oder eines gewerblichen Ablaufs, wenigstens zwei in Reihe bezüglich des Produkts angeordnete Verdampfer (I, II) aufweisend, wobei jeder ein Einkörper (II)- oder Mehrkörper (I)-Verdampfer ist und jeder der Körper (1, 2, 3) einen Heizdampfkreis (1a, 2a, 3a) und einen Kreis für den durch das Verdampfen erzeugten Dampf (4, 7; 5, 8; 6, 9) umfasst, wobei wenigstens zwei dieser Verdampfer (I, II) unter mechanischer Dampfverdichtung stehen und deshalb jeder einen mechanischen Dampfverdichter (10, 11) aufweist, dadurch gekennzeichnet, dass die Verdampfer nach Mehrkörperverdampfer-Bauweise verbunden sind.

2. Vorrichtung nach Anspruch 1, dadurch gekennzeichnet, dass sie ausser den mechanischen Verdichtern wenigstens eine weitere Einrichtung für Wärmezufuhr aufweist.

3. Vorrichtung nach Anspruch 1 oder 2, dadurch gekennzeichnet, dass die Druckseite (14) des mechanischen Verdichters (10) wenigstens eines Verdampfers (II) jeweils mit irgend einem der Kreise für erzeugten Dampf (5, 8) zwischen dem betrachteten Verdampfer mit mechanischer Verdichtung (II) und dem ihm vorangehenden Verdampfer mit mechanischer Verdichtung (I) verbunden ist.

4. Vorrichtung nach Anspruch 1, 2 oder 3, dadurch gekennzeichnet, dass die Druckseite (14) wenigstens eines mechanischen Verdichters (10) jeweils mit der Ansaugseite (12) des mechanischen Verdichters (11), der ihm vorausgeht, verbunden ist.

5. Vorrichtung nach Anspruch 1, 2, 3 oder 4, dadurch gekennzeichnet, dass die Druckseite (40) wenigstens eines mechanischen Verdichters (36) jeweils mit irgend einem der Heizdampfkreise (25a) zwischen dem betrachteten mechanischen Verdichter (36) und dem ihm vorausgehenden (35) verbunden ist.

6. Vorrichtung nach irgend einem der vorhergehenden Ansprüche, dadurch gekennzeichnet, dass wenigstens zwei der mechanischen Verdichter (10, 11) auf der selben Antriebswelle (22) montiert sind und direkt von ihr angetrieben werden.

7. Vorrichtung nach irgend einem der Ansprüche 1 bis 5, dadurch gekennzeichnet, dass wenigstens zwei der mechanischen Verdichter (10, 11) auf einer selben, von einer Antriebswelle (51) mit Hilfe einer Antriebsübersetzung (52) angetriebenen Welle (50) montiert sind.

8. Vorrichtung nach irgend einem der Ansprüche 1 bis 5, dadurch gekennzeichnet, dass wenigstens zwei der mechanischen Verdichter (10, 11) auf verschiedenen, von einer Antriebswelle (55) mit Hilfe einer Antriebsübersetzung (56) angetriebenen Wellen (53, 54) montiert sind.

**Claims**

1. Installation for concentrating a liquid product, such as a dairy product, a chemical product or an industrial effluent for example, comprising at least two evaporators (I, II) disposed in series on the product, each having a single stage (II) or multiple stages (I) and each of the stages (1, 2, 3) comprising a heating vapor circuit (1a, 2a, 3a) and a circuit for vapor created by evaporation (4, 7; 5, 8; 6, 9), two at least of these evaporators (I, II) comprising mechanical vapor compression and thus each comprising in mechanical vapor compressor (10, 11), characterized in that the evaporators are connected in a multiple stage evaporator configuration.

2. Installation according to claim 1, characterized in that besides the mechanical compressors it comprises at least one other heat supply means.

3. Installation according to claim 1 or 2, characterized in that the discharge side (14) of the mechanical compressor (10) of one evaporator at least (II) is connected respectively to any one of the created vapor circuits (5, 8) situated between the mechanical compression evaporator considered (II) and the mechanical compression evaporator which precedes it (I).

4. Installation according to claim 1, 2 or 3, characterized in that the discharge side (14) of one mechanical compressor at least (10) is connected respectively to the suction side (12) of the mechanical compressor (11) which precedes it.

5. Installation according to claim 1, 2, 3 or 4, characterized in that the discharge side (40) of one mechanical compressor at least (36) is connected respectively to any one of the heating vapor circuits (25a) situated between the mechanical compressor considered (36) and the one which precedes it (35).

6. Installation according to any of the preceding claims, characterized in that at least two of the mechanical compressors (10, 11) are mounted on and driven directly by the same drive shaft (22).

7. Installation according to any of claims 1 to 5, characterized in that at least two of the mechanical compressors (10, 11) are mounted on the same shaft (50) driven by a drive shaft (51) through a step-up drive (52).

8. Installation according to any one of claims 1 to 5, characterized in that at least two of the mechanical compressors (10, 11) are mounted on separate shafts (53, 54) driven by a drive shaft (55) through a step-up drive (56).

FIG. 1

FIG. 2

FIG. 3

FIG. 4

FIG. 5